# EUROPÄISCHE PATENTSCHRIFT

(11) **EP 1 070 275 B1**
(45) Veröffentlichungstag und Bekanntmachung des Hinweises auf die Patenterteilung: **02.10.2002**
(21) Anmeldenummer: 99914562.6
(22) Anmeldetag: 01.04.1999
(51) Int. Cl.: G02F 1/03

(54) **TRANSVERSALER ELEKTROOPTISCHER MODULATOR**
TRANSVERSAL ELECTRO OPTICAL MODULATOR
MODULATEUR ELECTRO-OPTIQUE TRANSVERSAL

(30) Priorität: 08.04.1998 DE 19815841
(43) Veröffentlichungstag der Anmeldung: 24.01.2001
(73) Patentinhaber: Linos Photonics GmbH, 37081 Göttingen (DE)
(72) Erfinder: DIEDRICH, Frank, D-82110 Germering (DE); LEDIG, Mario, D-82131 Gauting (DE); FEHN, Thomas, D-96317 Kronach (DE); ENGEL, Thomas, D-81735 München (DE)
(74) Vertreter: Säger, Manfred, Dipl.-Ing.
(86) Internationale Anmeldenummer: EP9902235
(87) Internationale Veröffentlichungsnummer: WO99053364

(56) Entgegenhaltungen:
- US-A- 3 827 000
- PATENT ABSTRACTS OF JAPAN vol. 007, no. 057 (P-181), 9. März 1983 (1983-03-09) & JP 57 204023 A (SUMITOMO DENKI KOGYO KK), 14. Dezember 1982 (1982-12-14)

## Beschreibung

Die Erfindung betrifft die Verwendung eines elektrischen Verstärker, beispielsweise "Video-Output-Amplifier-Chips" (nachfolgend kurz Video-Chips genannt).

Mittels elektrischer Verstärker ansteuerbare, transversale elektrooptische Modulatoren (EOMs) aus zumindest zwei Modulatorelementen zur Modulation der Lichtwelle eines Laserstrahls, vorzugsweise für die Fernsehbildprojektion sind an sich bekannt (US 3 827 000).

Laserstrahlungsquellen einzusetzen für die Fernsehbildprojektion ist auch an sich bekannt (DE-PS 43 06 797).

Für die Fernsehbildprojektion werden derzeit akustooptische und elektrooptische Modulatoren verwendet. Bei den erstgenannten ist der niedrige Systempreis vorteilhaft, wohingegen der schlechte Wirkungsgrad nachteilig ist. Zur Erzielung einer hohen Modulationsbandbreite ist eine starke Fokussierung erforderlich, wodurch andererseits die Beugungseffizienz klein wird. Außerdem wird die Qualität der Wellenfronten verschlechtert, was die Einkoppeleffizienz in optische Fasern verschlechtert.

Bei elektrooptischen Modulatoren ist die erreichbare hohe optische Effizienz vorteilhaft. Derzeit verfügbare elektrooptische Modulatoren mit optischen Verlusten von kleiner 10 % sind erhältlich (z.B. Datenblatt LM 0202 Gesänger Optoelektronik). Nachteilig ist hierbei die hohe Ansteuerspannung, sie liegt typischerweise bei einigen 100 V. Daher sind aufwendige elektrische Verstärker und Ansteuergeräte erforderlich, wodurch der Systempreis hoch wird.

Der Erfindung liegt deshalb die Aufgabe zugrunde, einen EOM in kleiner Baugröße und billig herstellbar bereitzustellen, der eine Eignung für ein Kontrastverhältnis von mindestens 1:1000 und eine möglichst hohe optische Effizienz mit einer Modulationsbreite von bis zu 90 MHz besitzt.

Diese Aufgabe wird erfindungsgemäß durch den Gegestand des Anspruchs 1 gelöst.

Durch die - optische - Hintereinanderanordnung einiger Modulatorelemente läßt sich die Ansteuerspannung für jedes Modulatorelement verringern. Die Hintereinanderschaltung mit hoher optischer Effizienz läßt sich nur dann sicherstellen, wenn vor und hinter jedem, vorzugsweise jedem zweiten Modulatorelement eine Fokussiereinrichtung angeordnet ist, so daß in jedem Modulatorelement eine Strahlungstaille zu liegen kommt. In diesem Falle bei beispielsweise vier Modulatorelementen ist eine Ansteuerspannung von unter 50 V möglich, so daß man erfindungsgemäß einfach herzustellende, oder im Handel erhältliche elektrische Verstärker, beispielsweise "Video-Output-Amplifier-Chips" (nachfolgend kurz Video-Chips genannt) einsetzen kann, von denen je ein Video-Chip je ein Modulatorelement ansteuert und wobei an den Eingängen aller Video-Chips dasselbe Steuersignal anlegbar ist.

Weitere zweckmäßige Ausgestaltung und Weiterbildungen der Erfindung sind in den Unteransprüchen gekennzeichnet.

Ein Ausführungsbeispiel eines erfindungsgemäß zu verwendenden EOMs wird nachfolgend unter Bezugnahme auf die Zeichnung näher erläutert. In dieser zeigt:

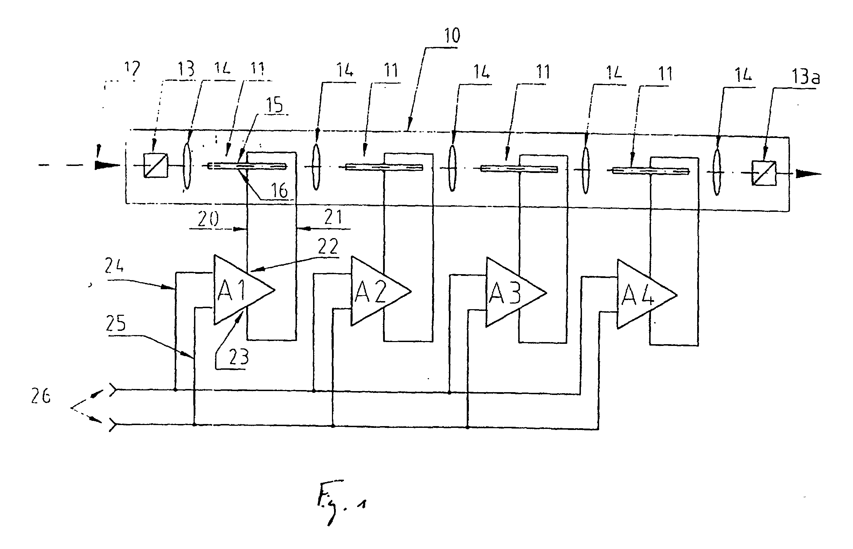

- Figur 1: den transversalen, elektrooptischen Modulator, im schematischen Ansteuerschaltbild mit den zugehörigen elektrischen Verstärkern.

Mit 10 ist der transversale, elektrooptische Modulator (EOM) aus insgesamt vier Modulatorelementen 11 dargestellt, die bezüglich des insgesamt mit 12 bezeichneten Laserstrahls fluchtend angeordnet sind. Am Eingang des Lichtstrahls 12 ist ein Polarisator 13 und am Ende ebenfalls ein Polarisator 13a angeordnet. Vor und hinter jedem Modulatorelement 11 ist eine als bikonvexe Linse 14 ausgebildete Fokussiereinrichtung dergestalt angeordnet, daß eine Strahlungstaille im Bereich jedes Modulatorelements zu liegen kommt.

Das erste Modulatorelement 11 ist mit Elektroden 15, 16 versehen, die über Anschlüsse 20, 21 mit den Ausgängen 22, 23 eines ersten elektrischen Verstärkers A1 verbunden ist, dessen beide Eingänge 24, 25 mit der insgesamt mit 26 bezeichneten Ansteuerleitung für das Steuersignal des ersten Verstärkers A1 verbunden ist.

Demgemäß sind jedem Modulatorelement 11 je ein elektrischer Verstärker A2, A3 und A4 (für das vierte und letzte Modulatorelement 11) in gleicher Weise zugeordnet.

Im Betrieb wird also ein jeweils im Bereich jeden Modulatorelementes 11 fokussierter Laserstrahl 12 zwar von einem separaten elektrischen Verstärker A1 bis A4, jedoch mit demselben Steuersignal der Steuersignalleitung 26 angesteuert, was den Vorteil in sich birgt, daß infolge der vergrößerten wirksamen Durchtrittslänge die jeweils benötigte Schaltspannung an jedem Modulatorelement entsprechend verringert wird, so daß übliche Video-Output-Amplifier-Chips verwendet werden können.

## Patentansprüche

1. Verwendung von an sich bekannten Video-Output-Amplifier-Chips für TV-Geräte als elektrische Verstärker bei mittels elektrischer Verstärker (A1, A2, A3, A4) ansteuerbaren, transversalen elektrooptischen Modulatoren (EOM 10) aus zumindest zwei Modulatorelementen (11) zur Modulation der Lichtwelle (12) eines Laserstrahls, vorzugsweise für die Fernsehbildprojektion, wobei die Modulatorelemente (11) bezüglich des Laserstrahls (12) hintereinander angeordnet sind, wobei vor und hinter vorzugsweise jedem zweiten Modulatorelement (11) eine Fokussiereinrichtung (14) angeordnet ist und jedem Modulatorelement (11) der Ausgang je eines elektrischen Verstärkers (A1, A2, A3, A4) zugeordnet ist und die Eingänge (24, 25) aller elektrischen Verstärker (A1, A2, A3, A4) an dieselbe Steuerleitung (26) für das Steuersignal angeschlossen sind.

2. Verwendung nach Anspruch 1, **dadurch gekennzeichnet, daß** die Fokussiereinrichtung zumindest eine optische Linse (14) aufweist.

3. Verwendung nach Anspruch 1 oder 2, **dadurch gekennzeichnet, daß** vor dem ersten und nach dem letzten Modulatorelement (11) je ein Polarisator (13 bzw. 13a) angeordnet ist.

4. Verwendung nach einem der Ansprüche 1 bis 3, **dadurch gekennzeichnet, daß** das Modulatorelenent (11) Einkristalle eines der folgenden Werkstoffe aufweist: ADP, AD*P, KDP, KD*P, KTP, KTA, RTA, Lithiumniobat, Lithiumtantalat, BBO, Kaliumniobat.

5. Verwendung nach einem der Ansprüche 1 bis 4, **dadurch gekennzeichnet, daß** die Ausdehnung in Richtung des elektrischen Feldes des Steuersignsls, also der Dicke des Modulationselements (11) im Bereich von 0,1 bis 1 mmm und die elektrische Kapazität ezwischen 5 bis 20 pF und /oder die Länge des EOM zwischen 5 und 30 mm liegt.

## Claims

1. Use of per se known video output amplifier chips for TV units as electrical amplifiers in transverse electro-optical modulators (EOM 10) which comprise at least two modulator elements (11) and which are actuable by means of electrical amplifiers (A1, A2, A3, A4) for modulation of the light wave (12) of a laser beam, preferably for television picture projection, wherein the modulator elements (11) are arranged in succession with respect to the laser beam (12), wherein a focusing device (14) is arranged in front of and behind preferably each second modulator element (11) and the output of a respective electrical amplifier (A1, A2, A3, A4) is associated with each modulator element (11) and the inputs (24, 25) of all electrical amplifiers (A1, A2, A3, A4) are connected to the same control line (26) for the control signal.

2. Use according to claim 1 **characterised in that** the focusing device has at least one optical lens (14).

3. Use according to claim 1 or claim 2 **characterised in that** a respective polariser (13 and 13a) is arranged in front of the first and after the last modulator element (11).

4. Use according to one of claims 1 to 3 **characterised in that** the modulator element (11) has single crystals of one of the following materials: ADP, AD*P, KDP, KD*P, KTP, KTA, RTA, lithium niobate, lithium tantalate, BBO and potassium niobate.

5. Use according to one of claims 1 to 4 **characterised in that** the extent in the direction of the electrical field of the control signal, that is to say the thickness of the modulation element (11), is in the range of 0.1 to 1 mm and the electrical capacitance is between 5 to 20 pF and/or the length of the EOM is between 5 and 30 mm.

## Revendications

1. Utilisation de video output amplifier chips connus en soi pour téléviseurs sous forme d'amplificateurs électriques pour des modulateurs électro-optiques (EOM 10) transversaux pouvant être commandés au moyen d'amplificateurs électriques (A1, A2, A3, A4) et comprenant au moins deux éléments modulateurs (11) pour moduler l'onde lumineuse (12) d'un rayon laser, de préférence pour la projection d'images de télévision, les éléments modulateurs (11) étant disposés l'un derrière l'autre relativement au rayon laser (12), un dispositif de focalisation (14) étant disposé avant et après un élément modulateur (11) sur deux de préférence, et la sortie de chaque amplificateur électrique (A1, A2, A3, A4) étant associée à chaque élément modulateur (11) et les entrées (24, 25) de tous les amplificateurs électriques (A1, A2, A3, A4) étant raccordées à la même ligne de commande (26) pour le signal de commande.

2. Utilisation selon la revendication 1, **caractérisée en ce que** le dispositif de focalisation présente au moins une lentique optique (14).

3. Utilisation selon la revendication 1 ou 2, **caractérisée en ce qu'**un polarisateur (13 respectivement 13a) est disposé avant le premier et après le dernier élément modulateur (11).

4. Utilisation selon l'une des revendications 1 à 3, **caractérisée en ce que** l'élément modulateur (11) présente des monocristaux d'une des matières suivantes: ADP, AD*P, KDP, KD*P, KTP, KTA, RTA, niobate de lithium, tantalate de lithium, BBO, niobate de potassium.

5. Utilisation selon l'une des revendications 1 à 4, **caractérisée en ce que** l'extension en direction du champ électrique du signal de commande, donc de l'épaisseur de l'élément de modulation (11), se situe dans la plage de 0,1 à 1 mm et la capacité électrique entre 5 et 20 pF et/ou la longueur de l'EOM entre 5 et 30 mm.
